# EUROPEAN PATENT APPLICATION

(11) **EP 2 295 267 A1**
(43) Date of publication of application: **16.03.2011**
(21) Application number: 09170046.8
(22) Date of filing: 11.09.2009
(51) Int. Cl.: B60C 11/16

(54) **Tire stud for snow tire**

(71) Applicant: Liang, Wu-Ming, Taiwan (TW); Chang, Ping-Nan, Taichung (TW)
(72) Inventor: Liang, Wu-Ming, Taichung (TW)
(74) Representative: Viering, Hans-Martin

(57) **Abstract**

A tire stud having high binding strength, high wear resistance and falling preventive characteristics is disclosed to include a jacket (10) that is embedded in the tire (50) and has a circular base (11) and a shank (12) extended from the circular base (11) and terminating in a tapered bearing portion (13), a wearing ring (30) that has a top face (32), a tapered bottom face (33), a bottom edge (34) located on the center of the lowest part of the tapered bottom face (33) and a tapered through hole (31) cut through the top face (32) and the bottom edge (34) and press-fitted onto the tapered bearing portion (13) of the jacket (10), and a pin (40) axially driven into the tapered bearing portion (13) of the shank (12) of the jacket (10) and partially protruding beyond the tapered bearing portion (13).

## Description

### BACKGROUND OF THE INVENTION

### 1. Field of the Invention:

The present invention relates to tire stud for snow tire and more particularly, to a wear-resistant and falling preventive tire stud for snow tire.

### 2. Description of the Related Art:

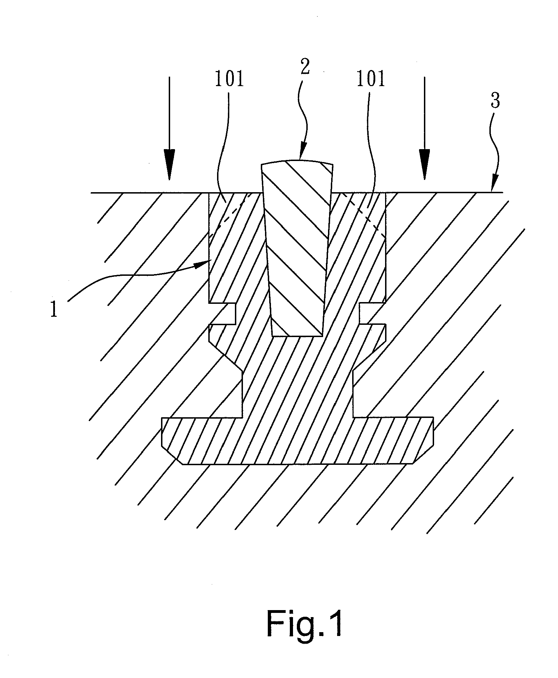

Referring to FIG. 1, a conventional tire stud is shown comprising a jacket **1** and a pin **2.** The jacket **1** is made of a soft metal, such as soft ferrite, aluminum or their alloys. The pin **2** is inserted into the jacket **1** from the top, having a top part exposed to the outside of the jacket **1.**

When the tire stud is inserted into a hole molded into the tread design of a tire **3** and the tire **3** is rotated forwards or backwards, the top (outer) end **101** of the jacket **1** will be forced against the road or ice on the road. After a long use, the jacket **1** is worn at the top (outer) end **101,** and a clearance **102** appears in the tread design around the top (outer) end **101** of the jacket **1,** affecting the binding strength between the pin **2** and the jacket **1** and weakening the structural strength of the tire stud. Continuous use of the tire **3** will cause a clearance **103** to appear between the pin **2** and the jacket **1.** Continuously using the tire **3** may cause the pin **2** to fall from the jacket **1,** or may cause the entire tire stud to fall from the tire **3.** More particularly, when the front side of the top end of the jacket **1** starts to wear after a long use, the pressure acted upon the pin **2** during a backward movement of the vehicle may force the jacket **1** to deform, resulting in falling of the pin **2** from the jacket **1.**

Further, according to the aforesaid conventional design, the pin **2** is directly inserted into the jacket **1** by force. When forcing the pin **2** into the jacket **1,** the top opening of the jacket **1** will be forced to expand. When the top opening of the jacket **1** expands, the pin **2** tends to be forced away from the jacket **1** during running of the vehicle. Further, the aforesaid conventional design of tire stud has low torsional strength. This drawback causes the tire stud to be forced away from the tire easily when the steering direction of the tire is being changed.

### SUMMARY OF THE INVENTION

The present invention has been accomplished under the circumstances in view. It is one object of the present invention to provide a tire stud for snow tire, which has high binding strength and high wear resistance characteristics and will not fall from the tire.

To achieve this and other objects of the present invention, a tire stud comprises a jacket for embedding in the tread design of a snow tire, at least one wearing ring supported on the bearing portion of said jacket and a pin being axially driven into the shank. The jacket has a circular base and a shank perpendicularly upwardly extended from the center of the circular base. The shank has a bearing portion formed of at least a part thereof. Each wearing ring has a top face disposed at the top side, a tapered bottom face disposed at the bottom side, a bottom edge located on the center of the lowest part of the tapered bottom face and a through hole vertically cut through the center of the top face and the center of the bottom edge and press-fitted onto the tapered bearing portion of the jacket. The pin partially protrudes beyond the shank of the jacket when it is driven into the jacket.

The tire stud further comprises a locating ring press-fitted onto the bearing portion of the shank of the jacket and disposed at a bottom side relative to the at least one wearing ring. The locating ring has a through hole cut through top and bottom sides thereof and press-fitted onto the bearing portion of the shank of the jacket and at least one pawl protruded from the top side thereof for engaging into the inside of the tread design of a snow tire.

Further, the at least one wear ring has a hardness higher than the hardness of the jacket.

Further, the pin has a hardness higher than the hardness of the jacket.

Further, the bottom face of the each wear ring is a tapered face having a diameter gradually reducing in direction from the top face toward the bottom edge of the wear ring.

Further, the distance between the center and each pawl of the locating ring is not shorter than the radius of the at least one wear ring.

Further, the shank of the jacket has a coarsened peripheral surface.

Further, the at least one wear ring is selected from a material group of ferrite, aluminum and their alloys.

Further, the jacket is selected from a material group of ferrite, aluminum, copper and their alloys, and plastics.

Further, the pin is made of a metal alloy containing ferrite.

Further, the bearing portion of the shank of the jacket has a flange formed of a top end thereof and stopped at the top face of one the wear ring after the insertion of the pin into the shank.

Further, the through hole of each wear ring is a tapered through hole having a diameter gradually increasing in direction from the top face toward the bottom edge of the respective wear ring; the bearing portion of the shank of the jacket is tapered bearing portion fitting the tapered through hole of each wear ring.

Further, the metal alloy is selected from a group of tungsten steel, cast iron, alloy steel and stainless steel.

Further, the locating ring is selected from a material group of ferrite, aluminum, copper and their alloys, and plastics.

Further, the through hole of the locating ring is a tapered through hole having a diameter gradually increasing in direction from the top face toward the bottom edge of the respective wear ring; the bearing portion of the shank of the jacket is a tapered bearing portion fitting the tapered through hole of the locating ring.

The tire stud of the present invention has the relatively harder wear ring be attached to the tapered bearing portion of the shank of the jacket to enhance wear resistance so that the tire stud does not wear quickly with use and is more durable when compared to the prior art design. Further, under the protection of the flange of the jacket, the wear ring is prohibited from falling away from the jacket. Thus, the tire stud of the present invention has wear resistance and falling preventive characteristics.

Further, the arrangement of the extra locating ring enhances the strength of the tire stud against torque during rotation of the tire, eliminating or reducing the possibility of falling of the tire stud from the tire.

### BRIEF DESCRIPTION OF THE DRAWINGS

FIG. 1 is a schematic sectional view showing a tire stud mounted in the tread design of a tire according to the prior art.

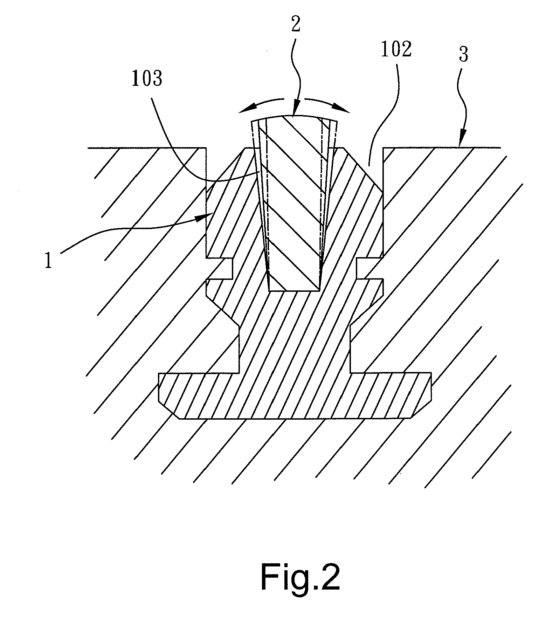

FIG. 2 corresponds to FIG. 1, showing a clearance appeared in the tread design around the top (outer) end of the jacket and the pin vibrated relative to the jacket.
FIG. 3 is an elevational assembly view of a tire stud in accordance with a first embodiment of the present invention.
FIG. 4 is an exploded view of the tire stud in accordance with the first embodiment of the present invention.
FIG. 5 is a schematic sectional view of the first embodiment of the present invention, showing the tire stud installed in the tread design of a tire of a vehicle.
FIG. 6 is an enlarged view of part A of FIG. 5.
FIG. 7 is a schematic drawing showing a tire stud installed in a snow tire in accordance with a second embodiment of the present invention.

### DETAILED DESCRIPTION OF THE PREFERRED EMBODIMENT

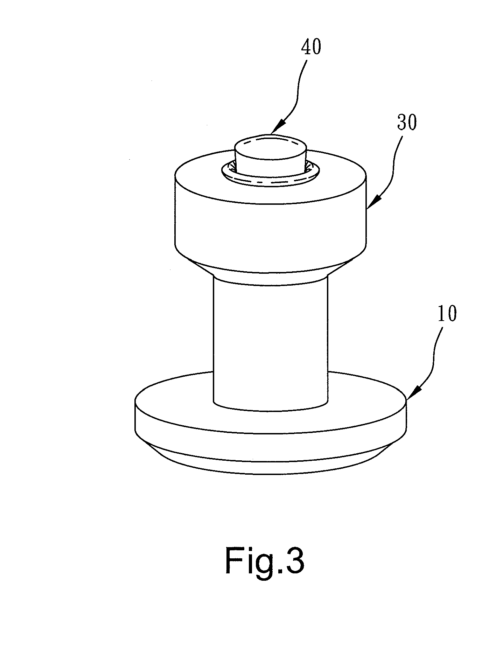

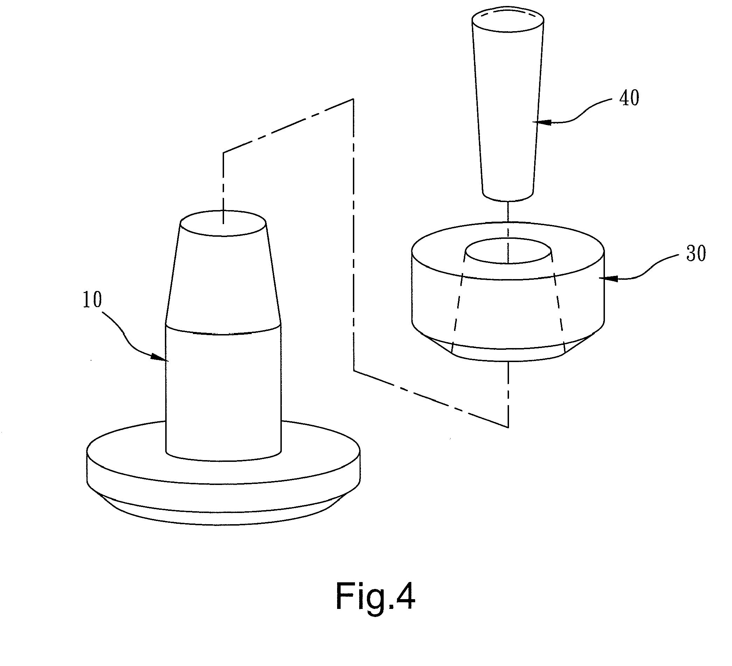

Referring to FIGS. 3 and 4, a tire stud for snow tire in accordance with a first embodiment of the present invention is shown comprising a jacket **10,** at least one wear ring **30** and a pin **40.**

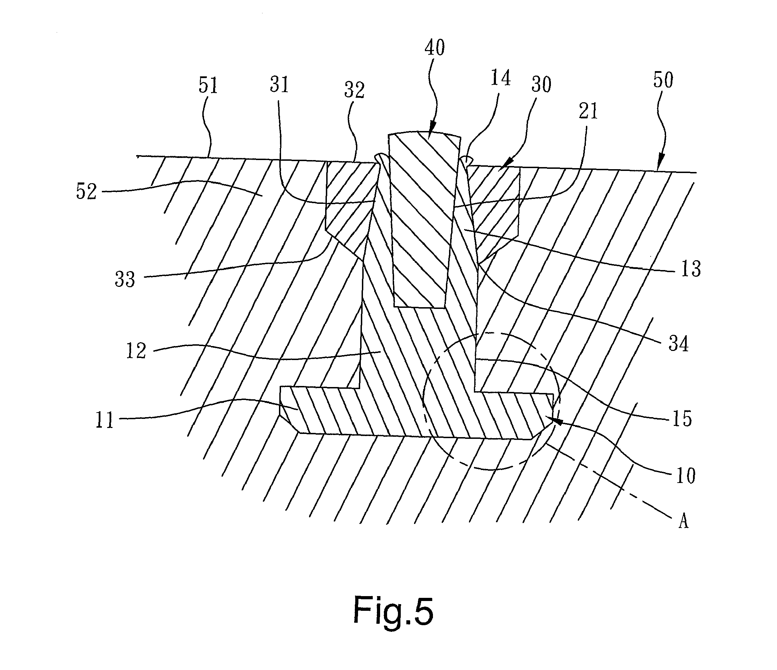

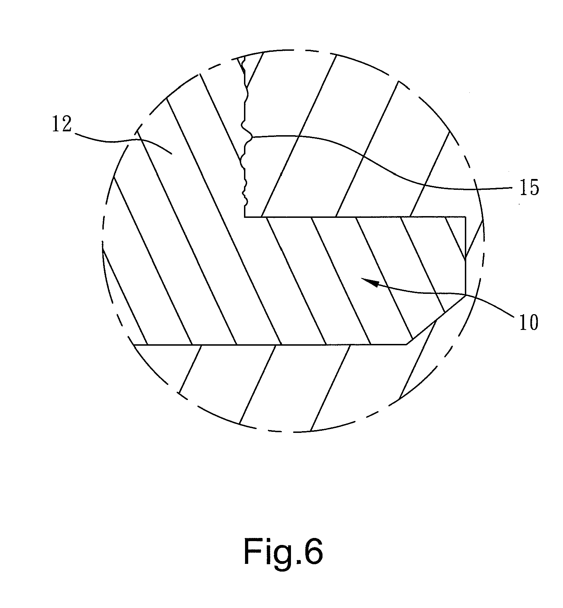

Referring to FIG. 5, the jacket **10** is embedded in the inside **52** (tread design) of the tire **50** and exposed to the outside of the surface **51** of the tire **50.** The jacket **10** has a circular base **11,** and a shank **12** perpendicularly upwardly extended from the center of the circular base **11.** The shank **12** has a tapered bearing portion **13** that has a diameter gradually reducing in direction away from the circular base **11** (alternatively, the shank **12** can be a tapered member having a diameter gradually reducing from the circular base **11** toward the free end thereof). After installation of the tire stud in the tire **50,** the free end of the tapered bearing portion **13** is squeezed to deform by the pin **40** and the wear ring **30,** forming a flange **14** that protrudes beyond the surface **51** of the tire **50.** Further, the shank **12** has a coarsened surface **15** (see FIG. 6). The coarsened surface **15** is formed by means of a shape design, enhancing the binding strength of the jacket **10** to the tire **50** against torque produced during running of the tire **50,** avoiding falling of the tire stud from the tire **50.** According to this embodiment, the jacket **10** can be made of ferrite, aluminum, metal alloy containing ferrite, aluminum or copper, or plastics. A ferrite-contained alloy can be carbon steel, alloy steel or stainless steel. Further, the shank **12** is a column, for example, circular column or polygonal column.

The wear ring **30** has a flat top face **32** disposed at the top side thereof, a tapered bottom face **33** disposed at the bottom side thereof opposite to the top face **32** and having a diameter downwardly gradually reducing in direction from the top side toward the bottom side, a bottom edge **34** located on the center of the lowest part of the tapered bottom face **33,** and a tapered through hole **31** vertically cut through the center of the top face **30** and the center of the bottom edge **34** and fitting the tapered bearing portion **13** of the jacket **10.** By means of the tapered through hole **31,** the wear ring **30** is tightly attached to the tapered bearing portion **13** of the jacket **10.** After installation of the tire stud in the tire **50,** the top face **32** is substantially kept in flush with the surface **51** of the tire **50.** According to the present invention, the wear ring **30** is made of ferrite, aluminum, ferrite alloy or aluminum alloy. A ferrite alloy can be carbon steel, forged steel, cast iron or stainless steel. The hardness of the wear ring **30** is higher than the hardness of the jacket **10** (more particularly higher than the hardness of the tapered bearing portion **13** of the jacket **10).** Further, the configuration of the wear ring **30** matches the configuration (circular column or polygonal column-like configuration) of the shank **12.**

The pin **40** is made of a high hardness alloy, for example, high hardness ferrite alloy or the like, such as tungsten steel, cast iron, alloy steel or stainless steel. The pin **40** is inserted into the inside of the jacket **10** from the top. After installation of the tire stud in the tire **50,** the pin **40** partially protrudes beyond the topmost edge of the tapered bearing portion **13** of the jacket **10** and the surface **51** of the tire **50.** Because the pin **40** has a hardness higher than the jacket **10,** implanting the pin **50** in the jacket **10** from the top (forcing the pin **50** into the jacket **10** with a high pressure) causes the tapered bearing portion **13** of the shank **12** of the jacket **10** to be squeezed outwards, forming a flange **14** that protrudes beyond the surface **51** of the tire **50** and is capped on the top face **32** of the wear ring **30** (the flange **14** is not seen in FIG. 4 because the pin **50** is not yet been driven into the shank **12** of the jacket **10)** to prohibit escaping of the wear ring **30** from the jacket **10.**

As stated above, the wear ring **30** is sleeved onto the tapered bearing portion **13** of the shank **12** of the jacket **10** substantially kept in flush with the surface **51** of the tire **50.** When the tire **50** is being rotated to rub against the road surface, the high hardness characteristic of the wear ring **30** enables the wear ring **30** to resist against high speed and high pressure friction, assuring long service life of the jacket **10.** Further, forcing the pin **40** into the relatively softer jacket **10** causes the jacket **10** to be squeezed in between the pin **40** and the wear ring **30,** enhancing the tightness among the component parts and avoiding the pin **40** from being forced away by a centrifugal force.

Further, the outwardly protruded flange **14** of the jacket **10** is stopped at the top face **32** of the wear ring **30,** working as anti-escape means to prohibit the wear ring **30** from escape.

Thus, when compared to the prior art tire stud design that wears quickly and tends to be forced out of the tire, the tire stud of the present invention has the relatively harder wear ring **30** be attached to the tapered bearing portion **13** of the shank **12** of the jacket **10** to enhance wear resistance during rotation of the tire **50** so that the tire stud does not wear quickly with use. Further, under the protection of the flange **14** of the jacket **10,** the wear ring **30** is prohibited from falling away from the jacket **10.** Thus, the tire stud of the present invention has wear resistance and falling preventive characteristics.

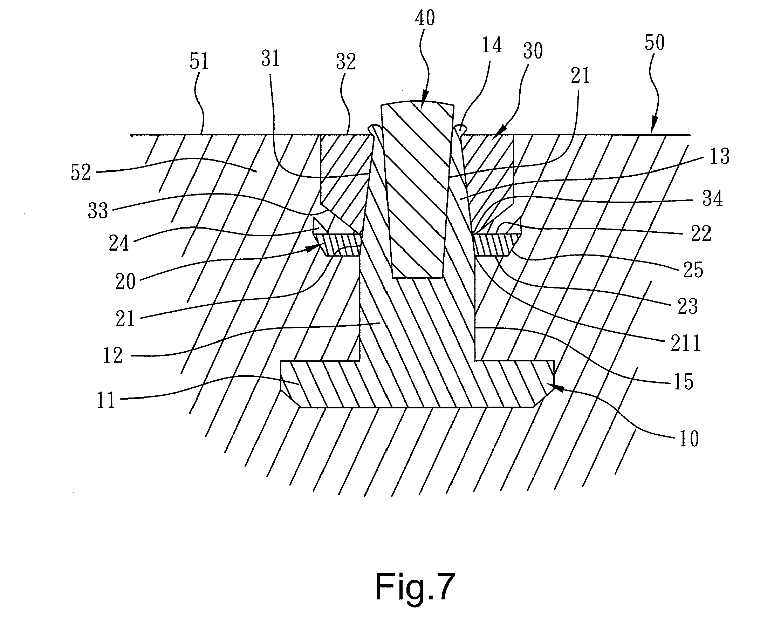

Referring to FIG. 7, a tire stud in accordance with a second embodiment of the present invention is shown comprising a jacket **10,** a locating ring **20,** a wear ring **30** and a pin **40.** The jacket **10,** the wear ring **30** and the pin **40** are same as like component parts of the aforesaid first embodiment. The difference between this second embodiment and the aforesaid first embodiment is that the use of the locating ring **20** in the second embodiment.

The locating ring **20** has a top face **22,** a bottom face **23** opposite to the top face **22,** a tapered through hole **21** cutting through the top face **22** and the bottom face **23,** and a plurality of pawls **24** protruded from the top face **22.** The angle of slope of the tapered through hole **21** fits the angle of slope of the tapered bearing portion **13** of the shank **12** of the jacket **10.** Further, the transverse width of the top face **22** is greater than the bottom face **23** so that the locating ring **20** defines a tapered peripheral wall **25.** By means of the tapered through hole **21,** the locating ring **20** is press-fitted onto the tapered bearing portion **13** of the shank **12** of the jacket **10,** forcing the bottom edge **211** of the tapered through hole **21** into engagement with the periphery of the tapered bearing portion **13** of the shank **12** of the jacket **10** tightly. The formation of the pawls **24** enhances binding tightness between the locating ring **20** and the tire **50** against torque during rotation of the tire **50** and eliminates or reduces the possibility of falling of the tire stud from the tire **50.** Further, the distance between the center of the locating ring **20** and each pawl **24** is greater than or equal to the radius of the wear ring **30** so that the pawls **24** can be forced into the inside **52** (tread design) of the tire **50** to prohibit biasing of the tire stud relative to the tire **50.**

Further, the locating ring **20** can be made of ferrite, aluminum, copper or their alloys, or plastics.

According to the aforesaid second embodiment, the extra locating ring **20** enhances the strength of the tire stud against torque from the tire **50,** showing superiority of the second embodiment over the first embodiment in eliminating or reducing the possibility of falling of the tire stud from the tire **50.**

In conclusion, a tire stud in accordance with the present invention has the wear ring press-fitted onto the shank of the jacket in the tire and kept in flush with the surface of the tread design of the tire to enhance wear resistance against friction during rotation of the tire on a road surface, prolonging the service life of the jacket. Further, the flange of the jacket protrudes beyond the surface of the tread design of the tire and is capped on the top face of the wear ring to prohibit escaping of the wear ring from the jacket. Therefore, the tire stud has wear resistance and falling preventive characteristics, assuring a high level of safety during running of the vehicle on snow.

A prototype of tire stud has been constructed with the features of FIGS. 3∼7. The tire stud functions smoothly to provide all of the features disclosed earlier.

Although particular embodiments of the invention haves been described in detail for purposes of illustration, various modifications and enhancements may be made without departing from the spirit and scope of the invention. Accordingly, the invention is not to be limited except as by the appended claims.

## Claims

1. A tire stud, comprising:
a jacket for embedding in the tread design of a snow tire, said jacket having a circular base and a shank perpendicularly upwardly extended from the center of said circular base, said shank having a bearing portion defined by at least a part thereof;
at least one wearing ring supported on the bearing portion of said jacket, each said wearing ring having a top face disposed at a top side thereof, a tapered bottom face disposed at a bottom side thereof opposite to said top face, a bottom edge located on the center of the lowest part of said tapered bottom face and a through hole vertically cut through the center of said top face and the center of said bottom edge and press-fitted onto the bearing portion of said jacket; and
a pin being axially driven into the bearing portion of said shank and partially protruding beyond the shank of said jacket.

2. The tire stud as claimed in claim 1, further comprising a locating ring press-fitted onto the bearing portion of said shank of said jacket and disposed at a bottom side relative to said at least one wearing ring, said locating ring having a through hole cut through top and bottom sides thereof and press-fitted onto the bearing portion of said shank of said jacket and at least one pawl protruded from the top side thereof for engaging into the inside of the tread design of a snow tire.

3. The tire stud as claimed in claim 1, wherein said at least one wear ring has a hardness higher than the hardness of said jacket.

4. The tire stud as claimed in claim 1, wherein said pin has a hardness higher than the hardness of said jacket.

5. The tire stud as claimed in claim 1 or 2, wherein the bottom face of said each said wear ring is a tapered face having a diameter gradually reducing in direction from said top face toward said bottom edge of the respective wear ring.

6. The tire stud as claimed in claim 2, wherein the distance between the center and each pawl of said locating ring is not shorter than the radius of said at least one wear ring.

7. The tire stud as claimed in claim 1, wherein said shank of said jacket has a coarsened peripheral surface.

8. The tire stud as claimed in claim 1, 2 or 3, wherein said at least one wear ring is selected from a material group of ferrite, aluminum and their alloys.

9. The tire stud as claimed in claim 1, 2, 3 or 4, wherein said jacket is selected from a material group of ferrite, aluminum, copper and their alloys, and plastics.

10. The tire stud as claimed in claim 1 or 4, wherein said pin is made of a metal alloy containing ferrite.

11. The tire stud as claimed in claim 1, wherein the bearing portion of said shank of said jacket has a flange formed of a top end thereof and stopped at the top face of one said wear ring after the insertion of said pin into said shank.

12. The tire stud as claimed in claim 1, wherein the through hole of each said wear ring is a tapered through hole having a diameter gradually increasing in direction from the top face toward the bottom edge of the respective wear ring; the bearing portion of said shank of said jacket is tapered bearing portion fitting the tapered through hole of each said wear ring.

13. The tire stud as claimed in claim 10, wherein said metal alloy is selected from a group of tungsten steel, cast iron, alloy steel and stainless steel.

14. The tire stud as claimed in claim 1, wherein said locating ring is selected from a material group of ferrite, aluminum, copper and their alloys, and plastics.

15. The tire stud as claimed in claim 2, wherein the through hole of said locating ring is a tapered through hole having a diameter gradually increasing in direction from the top face toward the bottom edge of the respective wear ring; the bearing portion of said shank of said jacket is a tapered bearing portion fitting the tapered through hole of said locating ring.
